# EUROPÄISCHE PATENTSCHRIFT

(11) **EP 3 604 108 B1**
(45) Veröffentlichungstag und Bekanntmachung des Hinweises auf die Patenterteilung: **16.12.2020**
(21) Anmeldenummer: 18194969.4
(22) Anmeldetag: 18.09.2018
(51) Int. Cl.: B63B 22/02, B63B 27/34, F16L 11/133

(54) **SYSTEM**
SYSTEM
SYSTÈME

(30) Priorität: 31.07.2018 EP 18186477
(43) Veröffentlichungstag der Anmeldung: 05.02.2020
(73) Patentinhaber: Dunlop Oil and Marine Ltd., Pyewipe, Grimsby, DN31 2SY (GB)
(72) Erfinder: Staton, Paul, Grimsby, DN37 0XN (GB); Zandiyeh, Ali Kambiez, Covenham-St-Mary, LN11 0PQ (GB); Bishop, Simon, Beverley, HU17 9TF (GB)
(74) Vertreter: Preusser, Andrea

(56) Entgegenhaltungen:
- WO-A1-2012/066031
- US-A- 3 664 286
- US-A- 3 980 038

## Beschreibung

Die Erfindung betrifft ein System.

Systeme, die eine schwimmfähige Boje und einen Schwimmschlauch aufweisen, sind aus dem Stand der Technik, z.B.dem Dokument US3664286, bekannt. Der Schwimmschlauch ist ebenfalls schwimmfähig. Derartige Systeme werden oftmals zusammen mit einer Ölplattform bzw. einer Ölbohrinsel verwendet. Dabei wird das geförderte Öl zunächst von der Bohrinsel über einen Unterwasserschlauch zu der Boje und von dieser über den Schwimmschlauch zu einem Tankschiff gefördert. Das Tankschiff kann das Öl aufnehmen. Sobald die Aufnahmekapazität des Tankschiffes erreicht ist, wird der Schwimmschlauch wieder von dem Tankschiff gelöst, damit das Tankschiff einen Hafen anfahren kann. Die schwimmfähige Boje zusammen mit dem Schwimmschlauch verbleibt dabei auf dem Meer. Bis ein neues Tankschiff an den Schwimmschlauch angeschlossen wird, können jedoch mehrere Stunden oder sogar mehrere Tage vergehen. Dies gilt insbesondere bei einem sehr rauen Seegang. Insbesondere in diesem Fall kann ein freies Ende des Schwimmschlauchs von dem Wasser umhergetrieben werden. Bei einem ungünstigen Fall kann es sogar vorkommen, dass das freie Ende des Schwimmschlauchs auf einem anderen Stück des Schwimmschlauchs aufliegt und damit eine Schlaufe formt. Wenn ein neues Tankschiff ein derartiges im Meer schwimmendes System anfährt, kann von dem neuen Tankschiff meist erst vor Ort festgestellt werden, ob das freie Ende des Schwimmschlauchs nicht überkreuzend zu einem anderen Abschnitt des Schwimmschlauchs angeordnet ist und/oder in welche Richtung das freie Ende des Schwimmschlauchs im Bezug zu der Boje angeordnet ist. Beide genannten Informationen sind für das Anfahren des neuen Tankschiffs wichtig, um eine Kollision mit der Boje und/oder dem Schwimmschlauch zu vermeiden sowie ein möglichst schnelles Ankoppeln des freien Endes des Schwimmschlauchs an das neue Tankschiff zu erlauben. Um diese Informationen zu erfassen, fährt das Tankschiff für gewöhnlich mit geringer Geschwindigkeit auf die Boje zu, wobei mit optischen Sichtmitteln, wie beispielsweise einem Fernglas, von der Besatzung auf dem Tankschiff beobachtet wird, wo sich der Schwimmschlauch befindet und in welcher Richtung der Schwimmschlauch zu der Boje ausgerichtet ist. Basierend hierauf wird das folgende Manöver für das Tankschiff geplant, sodass eine Ankopplung des Tankschiffs an den Schwimmschlauch vorgenommen werden kann. In einem ungünstigen Fall können jedoch mehrere Stunden vergehen, bevor die richtige Ankerposition für das Tankschiff gewählt und/oder eingenommen werden kann. Dies gilt insbesondere dann, wenn ein freies Ende des Schwimmschlauchs überkreuzend zu einem anderen Abschnitt des Schwimmschlauchs angeordnet ist. Denn vor dem Ankoppeln des Schwimmschlauchs an das Tankschiff muss zunächst gewährleistet werden, dass der Schwimmschlauch nicht überkreuzend angeordnet ist. Dazu werden Beischiffe herangerufen und/oder von dem Tankschiff herabgelassen, die die Überkreuzung des Schwimmschlauchs beheben. Aufgrund der entsprechenden Verzögerung entstehen jedoch hohe Kosten, die zu vermeiden sind.

Der Erfindung liegt die Aufgabe zugrunde, ein System mit einer schwimmfähigen Boje und einem Schwimmschlauch bereitzustellen, wobei das System eine einfache verzögerungsfreie und zuverlässige Ankopplung des Schwimmschlauchs an ein Tankschiff gewährleistet und/oder unterstützt.

Gelöst wird die Aufgabe durch ein System mit den Merkmalen des Anspruchs 1.

Vorgesehen ist also ein System, dass eine schwimmfähige Boje und ein Schwimmschlauch aufweist. Bei dem Schwimmschlauch handelt es sich vorzugsweise um einen schwimmfähigen Schlauch. Das System ist deshalb ebenfalls schwimmfähig. Der Schwimmschlauch weist eine Mehrzahl von schwimmfähigen Schlauchsegmenten auf, die in Reihe miteinander gekoppelt sind. Hierdurch kann ein gemeinsamer Fluidkanal von dem Schwimmschlauch bzw. den mehreren Schlauchsegmenten gebildet sein, der zum Leiten von einem Fluid, wie Öl, ausgebildet ist. Die Boje weist einen Flüssigkeitseingangsanschluss auf, der zum Anschluss für einen Unterwasserschlauch ausgebildet ist. Außerdem weist die Boje einen Flüssigkeitsausgangsanschluss auf, der mit einem ersten Ende des Schwimmschlauchs verbunden ist, sodass der Schwimmschlauch in einer geometrischen Anordnung zu der Boje angeordnet ist. Eine Mehrzahl von Knoteneinheiten sind an dem Schwimmschlauch und vorzugsweise der Boje derart befestigt, sodass die Knoteneinheiten zwischen der Boje und einem zweiten Ende des Schwimmschlauchs verteilt angeordnet sind. Jede Knoteneinheit ist mittels einer zugehörigen Funkeinheit zum Aufbau jeweils einer Funkverbindung zu jeder von zumindest zwei der weiteren Funkeinheiten der jeweiligen Knoteneinheiten ausgebildet, sodass ein Funknetzwerk, insbesondere ein Maschen-Funknetzwerk, entsteht. Außerdem ist jede Knoteneinheit zur Ermittlung einer Relativdistanz zu jeder über eine Funkverbindung verbundenen, weiteren Knoteneinheit basierend auf der jeweiligen Funkverbindung ausgebildet. Mindestens eine der Knoteneinheiten bildet eine Haupteinheit, die zum Sammeln der von den weiteren Knoteneinheiten ermittelten Relativdistanzen über die Funkverbindungen und/oder das Funknetzwerk ausgebildet ist. Die Haupteinheit ist basierend auf den gesammelten Relativdistanzen zur Ermittlung von Standortdaten ausgebildet, die die geometrische Anordnung des Schwimmschlauchs relativ zu der Boje repräsentieren. Außerdem weist die Haupteinheit eine Funktransmittereinheit auf, die zum Aussenden eines Standortsignals ausgebildet ist, das die Standortdaten repräsentiert.

Über das von dem System zur Verfügung gestellte Standortsignal bietet das System den Vorteil, dass bereits vor Ankunft eines Tankschiffes an dem System über die geometrische Anordnung des Schwimmschlauchs relativ zu der Boje geschlossen werden kann. Mittels des Standortsignals werden Standortdaten übertragen, die die geometrische Anordnung des Schwimmschlauchs relativ zu der Boje repräsentieren. Basierend auf diesen Standortdaten kann also bestimmt werden, ob der Schwimmschlauch grundsätzlich in einer Anordnung ist, die eine einfache und verlässliche Ankopplung des Schwimmschlauchs an ein Tankschiff erlaubt. Dies kann beispielsweise dann der Fall sein, wenn der Schwimmschlauch ohne eine Schlaufe zu der Boje geometrisch angeordnet ist, beispielsweise dann, wenn der Schwimmschlauch ohne Schlaufen und/oder ohne geknickte Abschnitte von der Boje wegweisend ausgerichtet ist. Die Funktransmittereinheit kann integral mit oder separat zu der Funkeinheit der Haupteinheit ausgebildet sein. Das Standortsignal kann beispielsweise drahtlos, also per Funk, ausgesendet werden. Hierzu kann die Funktransmittereinheit der Haupteinheit ausgebildet sein. Das Standortsignal kann kontinuierlich und/oder in diskreten Abständen und/oder periodisch ausgesendet werden. Das Standortsignal kann von einem Empfänger empfangen werden, der an Land ist, einem Satelliten zugeordnet ist oder sich auf dem Tankschiff befindet. Jede der genannten Möglichkeiten bietet den Vorteil, dass bereits deutlich vor Ankunft des Tankschiffes auf die geometrische Anordnung des Schwimmschlauchs relativ zu der Boje geschlossen werden kann. Sollte in einem ungünstigen Fall von dem Schwimmschlauch eine Schlaufe gebildet sein, so können Maßnahmen ergriffen werden, um die Schlaufe vor der Ankunft des Tankschiffes zu beseitigen. So kann beispielsweise ein kleineres Schiff zu dem System fahren, das ausgerüstet ist, um den Schwimmschlauch von der Schlaufe zu befreien, sodass der Schwimmschlauch schlaufenfrei zu der Boje angeordnet ist. Dies erlaubt eine einfache und verlässliche Ankopplung des Schwimmschlauchs an das Tankschiff.

Der Schwimmschlauch ist als schwimmfähiger Schlauch ausgebildet. Der Schwimmschlauch kann auch als schwimmfähiger Schlauchstrang bezeichnet sein. Somit sind sowohl die Boje als auch der Schwimmschlauch des Systems schwimmfähig. Entsprechendes gilt deshalb auch für das System als solches. Unter schwimmfähig wird vorzugsweise die Fähigkeit verstanden, in Wasser, insbesondere in Meerwasser, schwimmen zu können. Dies kann darin resultieren, dass die Boje und/oder der Schwimmschlauch jeweils zumindest abschnittsweise selbstständig oberhalb der Oberfläche des Wassers angeordnet bleibt. Der Schwimmschlauch weist eine Mehrzahl von schwimmfähigen Schlauchsegmenten auf. Jedes der Schlauchsegmente ist nach Art eines Schlauchs als solches und/oder eines Schlauchabschnitts ausgebildet. Jedes Schlauchsegment kann an den beiden zugehörigen Enden jeweils Kopplungselemente aufweisen, die ausgebildet sind, sodass mehrere Schlauchsegmente hintereinander, also in Reihe, miteinander gekoppelt werden können. Der Schwimmschlauch weist vorzugsweise einen zum Führen von Flüssigkeit, wie Öl, ausgebildeten Fluidkanal auf, der gemeinsam von den Schlauchsegmenten gebildet ist. Die Schlauchsegmente sind vorzugsweise derart miteinander gekoppelt, dass die Flüssigkeit durch den Flüssigkeitskanal verlustfrei geführt werden kann.

Der Flüssigkeitseingangsanschluss ist vorzugsweise an einer Unterseite der Boje angeordnet, sodass an den Flüssigkeitseingangsanschluss ein Unterwasserschlauch angeschlossen werden kann. Dabei handelt es sich vorzugsweise um einen zum Führen von Flüssigkeit, insbesondere Öl, ausgebildeten Schlauch. Dieser Schlauch wird auch als "Undersea pipeline" bezeichnet. Der Unterwasserschlauch kann also dazu ausgebildet sein, um eine Fluidverbindung zwischen dem Flüssigkeitseingangsanschluss der Boje und einer Bohrinsel oder einer Ölplattform herzustellen. Außerdem weist die Boje einen Flüssigkeitsausgangsanschluss auf. Der Flüssigkeitsausgangsanschluss kann eine direkte und/oder schaltbare Fluidverbindung mit dem Flüssigkeitseingangsanschluss aufweisen. Diese kann derart ausgebildet sein, um Flüssigkeit von dem Flüssigkeitseingangsanschluss zu dem Flüssigkeitsausgangsanschluss zu führen. Sofern die Verbindung schaltbar ausgebildet ist, beispielsweise durch ein Ventil, kann ein Strömen von Flüssigkeit von dem Flüssigkeitseingangsanschluss zu dem Flüssigkeitsausgangsanschluss gesteuert werden, insbesondere durch ein Öffnen des Ventils zugelassen werden oder durch ein Schließen des Ventils verhindert werden.

Unter einer geometrischen Anordnung kann beispielsweise eine räumliche Struktur und/oder eine räumliche Anordnung verstanden werden. Die geometrische Anordnung kann beispielsweise durch die räumlichen Koordinaten, beispielsweise in einer Ebene, des Schwimmschlauchs bezogen auf die Boje bestimmt und/oder repräsentiert sein. Alternativ oder ergänzend kann die geometrische Anordnung beispielsweise durch räumliche Koordinaten, vorzugsweise in einer Ebene, der Schlauchsegmente bezogen auf die Boje bestimmt und/oder repräsentiert sein. Die geometrische Anordnung kann sich alternativ oder ergänzend beispielsweise auch auf die räumliche Position und/oder die räumliche Ausrichtung des Schwimmschlauchs und/oder der Schlauchsegmente in Bezug auf die Boje beziehen. Die geometrische Anordnung des Schwimmschlauchs relativ zu der Boje kann also darüber Aufschluss geben, wie, wo und/oder in welcher geometrischen Form der Schwimmschlauch zu der Boje angeordnet ist. Um die Informationen über die geometrische Anordnung des Schwimmschlauchs relativ zu der Boje an einen Empfänger, wie beispielsweise eine Funksignalempfangseinheit und/oder einer Datenverarbeitungseinheit auf dem Tankschiff oder einer Landstation zur Verfügung zu stellen, ist die Haupteinheit basierend auf gesammelten Relativdistanzen zur Ermittlung von Standortdaten ausgebildet, die die geometrische Anordnung des Schwimmschlauchs relativ zu der Boje repräsentieren. Die Relativdistanzen beziehen sich dabei vorzugsweise auf die Abstände zwischen den Knoteneinheiten und/oder auf die Abstände von der Haupteinheit zu jeder weiteren der Knoteneinheiten. Sofern die direkten Abstände zwischen den Knoteneinheiten entlang des Schwimmschlauchs nicht von der Haupteinheit gespeichert sind, können die ebenfalls als ermittelte Relativdistanzen zwischen den Knoteneinheiten bei der Ermittlung der Standortdaten berücksichtigt werden. Ansonsten können auch die gespeicherten Abstände zwischen den Knoteneinheiten bei der Ermittlung der Standortdaten berücksichtigt werden. Unter den zuvor genannten, direkten Abständen ist insbesondere der Abstand zwischen benachbarten Knoteneinheiten entlang des Schwimmschlauchs gemeint. Die mittels den Funkverbindungen ermittelbaren Relativdistanzen können sich vorzugsweise auf die Relativdistanzen zwischen der Haupteinheit und jeder der weiteren Knoteneinheiten beziehen. Mittels dieser Daten lässt sich geometrisch abbilden, wie die geometrische Anordnung des Schwimmschlauchs relativ zu der Boje ist.

Zur Ermittlung der Relativdistanzen weisen die Knoteneinheiten Funkeinheiten auf. Mittels der Funkeinheiten können Funkverbindungen hergestellt werden, sodass ein Funknetzwerk, insbesondere ein Maschen-Funknetzwerk entsteht. Über die Funkverbindungen können Funksignale ausgetauscht werden. Die Funksignale haben dabei eine Laufzeit zwischen dem Aussenden und dem anschließenden Empfangen. Die Funksignale können deshalb dazu verwendet werden, um die Distanz zwischen den entsprechenden Funkeinheiten zu ermitteln. Hierzu sind die Knoteneinheiten ausgebildet. Die Funkverbindungen dienen deshalb insbesondere zur Ermittlung der Relativdistanzen zwischen den Knoteneinheiten bzw. den zugehörigen Funkeinheiten. Vorzugsweise sind die Knoteneinheiten so konfiguriert, dass die ermittelten Relativdistanzen über die Funkverbindungen des Funknetzwerks ausgetauscht werden. Außerdem kann es vorgesehen sein, dass jede Funkeinheit derart konfiguriert ist, dass die Relativdistanzen durch Triangulation auf Basis von Laufzeiten der über die Funkverbindungen ausgetauschten Signale ermittelt werden. Jede der Knoteneinheiten kann deshalb als eine elektronische Knoteneinheit ausgebildet und/oder bezeichnet sein. Jede der Knoteneinheiten ist mit dem System fest oder lösbar verbunden. So können alle oder zumindest ein Teil der Knoteneinheiten fest oder lösbar mit dem Schwimmschlauch verbunden sein. Es ist aber auch möglich, dass zumindest eine der Knoteneinheiten mit der Boje verbunden ist. Außerdem kann es vorgesehen sein, dass jeweils eine der Knoteneinheiten mit genau jeweils einem der Schlauchsegmente des Schwimmschlauchs verbunden ist. Es ist aber auch möglich, dass die Knoteneinheiten derart verteilt angeordnet sind, dass jedes zweite oder jedes dritte Schlauchsegment mit einer der Knoteneinheiten verbunden ist. Andere Verteilungen der Knoteneinheiten können ebenfalls vorgesehen sein. Zur Klarstellung sei erwähnt, dass der Schwimmschlauch zwei Enden hat. Zwischen den Enden bildet der Schwimmschlauch den bevorzugten Fluidkanal aus, der vorzugsweise als Flüssigkeitskanal ausgebildet ist. Das erste Ende des Schwimmschlauchs ist also vorzugsweise gegenüberliegend in Schlauchrichtung zu dem zweiten Ende des Schwimmschlauchs ausgebildet. Das erste Ende des Schwimmschlauchs ist mit dem Flüssigkeitsausgangsanschluss der Boje verbunden. Die Verbindung kann derart ausgebildet sein, dass Flüssigkeit von dem Flüssigkeitsausgangsanschluss in den Fluidkanal des Schwimmschlauchs gefördert werden kann. Dies ist insbesondere dann zweckmäßig, wenn Öl von einer Bohrinsel über einen Unterwasserschlauch, den Flüssigkeitseingangsanschluss, den Flüssigkeitsausgangsanschluss und den Schwimmschlauch zu einem Tankschiff gefördert werden soll.

Eine vorteilhafte Ausgestaltung des Systems zeichnet sich dadurch aus, dass jedes Schlauchsegment zumindest indirekt mit mindestens einer der Knoteneinheiten verbunden ist. Für jedes Schlauchsegment kann also mindestens eine Knoteneinheit vorgesehen sein, die mit dem jeweiligen Schlauchsegment verbunden ist. Deshalb kann mindestens eine Knoteneinheit mit jedem der Schlauchsegmente fest verbunden sein und/oder dem jeweiligen Schlauchsegment zugeordnet sein. Die Verbindung und/oder Befestigung kann zumindest indirekt erfolgen. So können die Knoteneinheiten beispielsweise zwischen den Schlauchsegmenten befestigt sein, insbesondere mittels Schraubverbindungen an den Verbindungsflanschen der Schlauchsegmente, über die zwei aneinander grenzende Schlauchsegmente miteinander lösbar verbunden sind. Indem jedem Schlauchsegment zumindest eine Knoteneinheit zugeordnet und/oder damit verbunden ist, kann die geometrische Anordnung des Schwimmschlauchs zu der Boje über die Relativdistanzen besonders präzise bestimmt sein.

Eine weitere vorteilhafte Ausgestaltung des Systems zeichnet sich dadurch aus, dass jedes Schlauchsegment jeweils eine der Knoteneinheiten umfasst. So kann jede Knoteneinheit genau an jeweils einer der Schlauchsegmente befestigt sein und/oder an einen Teil des jeweiligen Schlauchsegments bilden. Jede Knoteneinheit kann somit genau einem Schlauchsegment zugeordnet sein. Die Zuordnung einer Knoteneinheit zu einem Schlauchsegment bietet den Vorteil, dass der Austausch eines Schlauchsegments gleichzeitig einen Austausch der Knoteneinheit bewirken kann. Dadurch wird die Reparatur eines Schwimmschlauchs besonders einfach.

Eine weitere vorteilhafte Ausgestaltung des Systems zeichnet sich dadurch aus, dass die Knoteneinheit jedes Schlauchsegments an der seitlichen Außenfläche des jeweiligen Schlauchsegments befestigt ist. So kann die jeweilige Knoteneinheit an der Außenfläche des jeweiligen Schlauchsegments kraftschlüssig und/oder stoffschlüssig befestigt sein. Dabei ist es bevorzugt vorgesehen, dass die Knoteneinheiten wasserdicht ausgebildet sind.

Eine weitere vorteilhafte Ausgestaltung des Systems zeichnet sich dadurch aus, dass die Knoteneinheit jedes Schlauchsegments in eine Mantelwandung des jeweiligen Schlauchsegments eingebettet ist. Damit kann die jeweilige Knoteneinheit effektiv vor äußeren Umwelteinflüssen geschützt sein. Dies gilt insbesondere dann, wenn die Mantelwandung Gummimaterial aufweist, in das die jeweilige Knoteneinheit eingebettet ist. Durch das Gummimaterial kann die jeweilige Knoteneinheit auch gegen Wasser geschützt sein. Mit anderen Worten, kann die jeweilige Knoteneinheit durch das Gummimaterial wasserdicht versiegelt sein. Das Gummimaterial bietet darüber hinaus einen Stoßschutz. Denn das Gummimaterial kann mechanische Stöße abdämpfen, was die Langlebigkeit der Knoteneinheit erhöht.

Eine weitere vorteilhafte Ausgestaltung des Systems zeichnet sich dadurch aus, dass die Boje die Haupteinheit umfasst, sodass die Haupteinheit mit der Boje verbunden ist. Die Haupteinheit kann einen größeren Platzbedarf und/oder eine leistungsstärkere Energieversorgung benötigen. Dies kann mittels der Boje gewährleistet werden, da die Boje oftmals mehr Platz als jede der Schlauchsegmente bietet. Darüber hinaus können eine Batterie und/oder eine Solarzelle auf der Boje angeordnet sein, die zur elektrischen Versorgung der Haupteinheit ausgebildet ist. Die Anordnung der Haupteinheit an der Boje ist deshalb vorteilhaft.

Eine weitere vorteilhafte Ausgestaltung des Systems zeichnet sich dadurch aus, dass jede der Knoteneinheiten eine Batterie aufweist, die zur elektrischen Versorgung der jeweiligen Knoteneinheit dient. Die Batterie kann als Akku-Batterie ausgebildet sein. Außerdem kann es vorgesehen sein, dass jede der Knoteneinheiten, insbesondere außer der Haupteinheit, keine weiteren Energieversorgungsmittel aufweist. Dadurch können die Knoteneinheiten besonders kompakt ausgebildet sein. Schließlich gewährleistet eine Batterie als Energiequelle eine besonders unabhängige Verwendung der Knoteneinheiten.

Eine weitere vorteilhafte Ausgestaltung des Systems zeichnet sich dadurch aus, dass die Haupteinheit eine Navigationseinheit aufweist, die zum Empfang eines satellitengestützten, drahtlosen Navigationssignals ausgebildet ist, wobei die Navigationseinheit konfiguriert ist, einen geografischen Bojenstandort der Boje basierend auf dem Navigationssignal zu ermitteln, und wobei die Haupteinheit konfiguriert ist, die Standortdaten derart zu ergänzen, sodass die Standortdaten auch den geografischen Bojenstandort repräsentieren. Der geografische Standort der Boje kann sich auf geografische Koordination der Boje beziehen. Der geografische Standort der Boje ermöglicht die Identifizierung der absoluten, nicht nur relativen, geografischen Positionen der Boje und damit des Systems. Das Navigationssignal kann von mehreren Satelliten gesendet werden, sodass die Navigationseinheit den geografischen Bojenstandort durch Triangulation und/oder anhand der Laufzeiten der Navigationssignale ermittelt. Hierzu ist die Navigationseinheit bevorzugt ausgebildet. Indem die Standortdaten die geometrische Anordnung des Schwimmschlauchs relativ zu der Boje sowie den geografischen Bojenstandort repräsentieren können, erlauben die Standortdaten eine genaue Information über den Ort der Boje und die Anordnung des Schwimmschlauchs relativ zu der Boje. Entsprechende Standortdaten können von dem Standortsignal repräsentiert sein, dass mittels der Transmittereinheit der Haupteinheit drahtlos versendet werden kann.

Eine vorteilhafte Ausgestaltung des Systems zeichnet sich dadurch aus, dass einer der Schlauchsegmente die Haupteinheit umfasst, sodass die Haupteinheit mit diesen Schlauchsegment verbunden ist, das als Hauptschlauchsegment bezeichnet ist. Bezüglich der vorteilhaften Erläuterungen, bevorzugten Merkmale, Vorteile und/oder Effekte, wie sie im Zusammenhang mit der Haupteinheit erläutert worden sind, wird für das zuvor genannte Schlauchsegment in analoger Weise auf die vorangegangenen Erörterungen der Haupteinheit Bezug genommen.

Eine weitere vorteilhafte Ausgestaltung des Systems zeichnet sich dadurch aus, dass eine der Knoteneinheiten, die zumindest indirekt mit einem der Schlauchsegmente, insbesondere dem Hauptschlauchsegment, verbunden ist, eine weitere Navigationseinheit umfasst, die zum Empfang eines weiteren satellitengestützten, drahtlosen Navigationssignal ausgebildet ist, wobei die weitere Navigationseinheit zur Ermittlung eines geografischen Schlauchstandorts des jeweiligen Schlauchsegments basierend auf dem weiteren Navigationssignal konfiguriert ist, wobei die Funkeinheiten mittels der Funkverbindungen und/oder des Funknetzwerks zum Austausch des geografischen Schlauchstandorts konfiguriert sind, und wobei die Haupteinheit zum Erweitern der Standortdaten konfiguriert ist, sodass die Standortdaten auch den geografischen Schlauchstandort repräsentieren. Die Standortdaten können somit beispielsweise die geografische Anordnung des Schwimmschlauchs relativ zu der Boje, den geografischen Bojenstandort und den geografischen Schlauchstandort repräsentieren. Die Standortdaten geben in diesem Fall besonders präzise darüber Auskunft, wo und wie die Boje sowie der Schwimmschlauch angeordnet sind. Es kann vorgesehen sein, dass die Knoteneinheit eines jeden Schlauchsegments derart ausgebildet ist, wie es für das vorangegangene, erläuterte Ausführungsbeispiel des Schlauchsegments vorgesehen ist.

Eine weitere vorteilhafte Ausgestaltung des Systems zeichnet sich dadurch aus, dass die Funktransmittereinheit zum drahtlosen Aussenden des Standortsignals an einen Satellitenempfänger und/oder an einen an Land stationär installierten Empfänger ausgebildet ist. Alternativ oder ergänzend kann die Funktransmittereinheit zum drahtlosen Aussenden des Standortssignals an einen Empfänger auf einem Schiff, insbesondere einem Tankschiff, ausgebildet sein. Damit kann die Anordnung des Schwimmschlauchs relativ zu der Boje sowie die geografische Position des Systems aus der Ferne überwacht werden.

Eine vorteilhafte Ausgestaltung des Systems zeichnet sich dadurch aus, dass jedes Schlauchsegment eine Länge von mindestens 7,5 Metern oder mindestens 10 Metern aufweist. Entsprechendes kann für die Knoteneinheiten gelten, die verteilt zwischen der Boje und dem zweiten Ende des Schwimmschlauchs angeordnet sind. So können die in Reihe nacheinander angeordneten Knoteneinheiten jeweils mindestens einen Abstand von 7 Metern bzw. 9,5 Metern zueinander aufweisen. Die Abstände der Knoteneinheiten können auch zu den Längen der Schlauchsegmente korrespondieren. So können die Abstände zwischen den in Reihe angeordneten Knoteneinheiten beispielsweise mindestens 7,5 Meter oder mindestens 10 Meter sein. Die Abstände zwischen unmittelbar nacheinander angeordneten Knoteneinheiten entlang des Schwimmschlauchs von der Boje zu dem zweiten Ende des Schwimmschlauchs können von der Haupteinheit gespeichert sein. In diesem Fall ist es nicht notwendig, dass die genannten Abstände mittels der Funkverbindungen als Relativdistanzen erfasst werden.

Eine vorteilhafte Ausgestaltung des Systems zeichnet sich dadurch aus, dass jede Knoteneinheit zum Senden und Empfangen von Referenzsignalen über die Funkverbindungen ausgebildet ist, und wobei jede Knoteneinheit zur Ermittlung der Relativabstände mit einer Genauigkeit von mindestens 85%, vorzugsweise mindestens 95%, basierend auf den Referenzsignalen ausgebildet ist. Wird das Referenzsignal beispielsweise von einer Knoteneinheit zu einer anderen Knoteneinheit gesendet, die 20 Meter entfernt ist, so ist es besonders bevorzugt vorgesehen, dass der Abstand zwischen den beiden Knoteneinheiten mit einer Abweichung von maximal 3 Metern, vorzugsweise maximal 1 Meter, ermittelt wird. Besonders bevorzugt beträgt die Genauigkeit 97%. In diesem Fall beträgt die maximale Abweichung 0,6 Meter.

Eine weitere vorteilhafte Ausgestaltung des Systems zeichnet sich dadurch aus, dass die Knoteneinheiten zum Aktualisieren der ermittelten Relativdistanzen in vorbestimmten Zeitintervallen ausgebildet sind, wobei die Haupteinheit konfiguriert ist, die Standortdaten basierend auf den aktualisierten Relativdistanzen zu aktualisieren, und wobei die Funktransmittereinheit konfiguriert ist, das Standortsignal mit aktualisierten Standortdaten nach jeder Aktualisierung der Standortdaten zu senden. So kann es beispielsweise vorgesehen sein, dass die Relativdistanzen beispielsweise alle 30 Minuten aktualisiert werden. Daraufhin wird die Aktualisierung der Standortdaten durchgeführt, was wiederum zu dem Aussenden des Standortsignals führt, das die aktualisierten Standortdaten repräsentiert. Dadurch kann eine fortlaufende Überwachung der Anordnung des Schwimmschlauchs relativ zu der Boje vorgenommen werden.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figur 1: zeigt eine vorteilhafte Ausgestaltung des Systems in einer schematischen Ansicht.
- Figur 2: zeigt eine weitere vorteilhafte Ausgestaltung des Systems in einer schematischen Ansicht.
- Figur 3: zeigt eine vorteilhafte Ausgestaltung eines Endabschnitts eines Schlauchsegments in einer schematischen Seitenansicht.
- Figur 4: zeigt eine weitere vorteilhafte Ausgestaltung eines Endabschnitts eines Schlauchsegments in einer schematischen Seitenansicht und einer vergrößerten Darstellung eines Ausschnitts des Endabschnitts.
- Figur 5: zeigt eine weitere vorteilhafte Ausgestaltung eines Endabschnitts eines Schlauchsegments in einer schematischen Seitenansicht und einer vergrößerten Darstellung eines Ausschnitts der Mantelwandung des Endabschnitts.

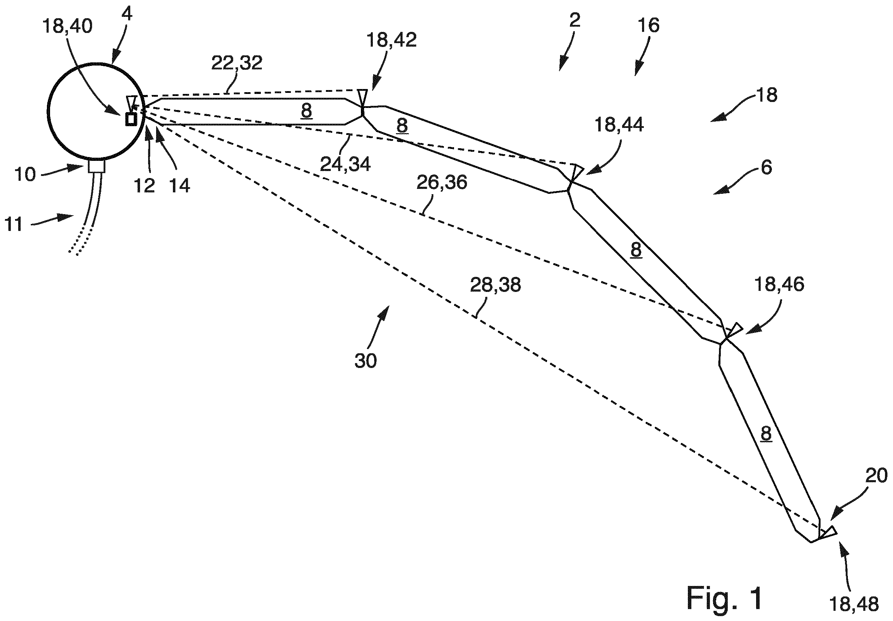

In der Figur 1 ist das System 2 mit einer schwimmfähigen Boje 4 und einem schwimmfähigen Schwimmschlauch 6 dargestellt. Der Schwimmschlauch 6 ist dabei von einer Mehrzahl von schwimmfähigen Schlauchsegmenten 8 gebildet. Die Schlauchsegmente 8 sind in einer Reihe hintereinander derart miteinander verbunden, dass von den Schlauchsegmenten 8 der Schwimmschlauch 6 mit einem durchgehenden, gemeinsamen Flüssigkeitskanal gebildet ist, der sich von einem ersten Ende 14 des Schlauchs 6 zu einem zweiten Ende 20 des Schlauchs 6 erstreckt. Mit dem ersten Ende 14 ist der Schwimmschlauch 6 mit einem Flüssigkeitsausgangsanschluss 12 der Boje 4 derart gekoppelt, sodass Flüssigkeit aus dem Flüssigkeitsausgangsanschluss 12 in den Flüssigkeitskanal des Schwimmschlauchs 6 strömen kann.

Das System 2 wird verwendet, um auf dem Meer zu schwimmen. Das System 2 ist deshalb ein schwimmfähiges System. Es kann auf Wasser schwimmen. Entsprechendes gilt für jedes Schlauchsegment 8 bzw. für den Schwimmschlauch 6 sowie für die Boje 4. Die Boje 4 ist mittels eines Flüssigkeitseingangsanschlusses 10 mit einem Unterwasserschlauch 11 verbindbar, der in Figur 1 nur abschnittsweise und schematisch dargestellt ist. Über den Unterwasserschlauch 11 kann Flüssigkeit, insbesondere Erdöl, von einer Bohrinsel zu der Boje bzw. dem zugehörigen Flüssigkeitseingangsanschluss 10 gefördert werden. Der Flüssigkeitseingangsanschluss 10 ist direkt oder schaltbar mit dem Flüssigkeitsausgangsanschluss 12 verbunden. Öl, das über den Unterwasserschlauch zu dem Flüssigkeitseingangsanschluss 10 der Boje 4 strömt, kann sodann über den Flüssigkeitsausgangsanschluss 12 und den daran gekoppelten Schwimmschlauch 6 gefördert werden. Das zweite Ende 20 des Schwimmschlauchs 6 kann mit einem Schwimmtanker (also ein als Tanker ausgestaltetes Schiff) gekoppelt sein, in den das Öl einströmen kann. Jedoch ist der Schwimmtanker nicht dauerhaft mit dem zweiten Ende 20 des Schwimmschlauchs 6 gekoppelt. Sobald die Tanks des Schwimmtankers voll sind, wird das zweite Ende 20 des Schwimmschlauchs 6 von dem Schwimmtanker entkoppelt, sodass der Schwimmtanker einen Hafen anlaufen kann. In der Zeit schwimmt der Schwimmschlauch 6 mit dem freien, zweiten Ende 20 auf dem Meer. Bei einem stürmischen Wetter und einem entsprechenden hohen Wellengang kann es dazu kommen, dass der Schwimmschlauch 6 schlaufenförmig überlappt. Eine erneute Ankopplung des Schwimmtankers an das zweite Ende 20 des Schwimmschlauchs ist sodann erschwert, wenn nicht sogar unmöglich. Um bereits vor dem Eintreffen des Schwimmtankers darüber informiert zu sein, ob der Schwimmschlauch 6 problemlos an den Schwimmtanker angekoppelt werden kann, ist es vorgesehen, dass das System 2 eine Mehrzahl von Knoteneinheiten 18 aufweist.

Die Mehrzahl von Knoteneinheiten 18 sind an dem Schwimmschlauch 6 und vorzugsweise der Boje 4 derart befestigt, dass die Knoteneinheiten 18 zwischen der Boje 4 und dem zweiten Ende 20 des Schwimmschlauchs 6 verteilt angeordnet sind. So kann es beispielsweise vorgesehen sein, dass eine als Haupteinheit 40 bezeichnete Knoteneinheit 18 an der Boje 4 befestigt ist. Eine weitere Knoteneinheit 18 kann als erste Knoteneinheit 42 bezeichnet sein, die am von der Boje 4 abgewandten Enden des ersten Schlauchsegments 8 befestigt ist. Entsprechendes kann für jedes der weiteren Schlauchsegmente 8 gelten. So kann für das zweite Schlauchsegment 8 eine zweite Knoteneinheit 44, für das dritte Schlauchsegment 8 eine dritte Knoteneinheit 46 und für das vierte Schlauchsegment 8 eine vierte Knoteneinheit 48 vorgesehen sein. Die den Schlauchsegmenten 8 zugeordneten Knoteneinheiten 42, 44, 46, 48 können fest an dem jeweiligen Schlauchsegment 8 befestigt sein.

Jede der Knoteneinheiten 18 ist mittels einer zugehörigen Funkeinheit zum Aufbau jeweils einer Funkverbindung 22, 24, 26, 28 zu jeder von zumindest zwei der weiteren Funkeinheiten der jeweiligen Knoteneinheiten 42, 44, 46, 48 ausgebildet, sodass daraus ein Funknetzwerk 30, insbesondere ein Maschen-Funknetzwerk, entsteht. Beispielhaft ist dies in der Figur 1 anhand der als Haupteinheit 40 bezeichneten Knoteneinheit 18 dargestellt. Die Funkeinheit der Haupteinheit 40 kann eine erste Funkverbindung 22 zu der Funkeinheit der ersten Knoteneinheit 42 aufbauen. Entsprechendes gilt für die zweite Funkverbindung 24 zu der zweiten Knoteneinheit 44, der dritten Funkverbindung 26 zu der dritten Knoteneinheit 46 und der vierten Funkverbindung 28 zu der vierten Knoteneinheit 48. Mittels der Funkverbindungen 22, 24, 26, 28 können Signale, insbesondere Referenzsignale, ausgetauscht werden. Basierend auf den ausgetauschten Signalen können die Relativdistanzen zwischen den Knoteneinheiten 18 ermittelt werden. So ist es vorgesehen, dass jede Knoteneinheit 18, 40, 42, 44, 46, 48 zur Ermittlung einer Relativdistanz 32, 34, 36, 38 zu jeder über eine Funkverbindung 22, 24, 26, 28 verbundenen, weiteren Knoteneinheit 42, 44, 46, 48 basierend auf der jeweiligen Funkverbindung 22, 24, 26, 28 ausgebildet ist. Rein beispielhaft soll dies anhand der Funkverbindungen 22, 24, 26, 28 erläutert werden, die in der Figur 1 dargestellt sind.

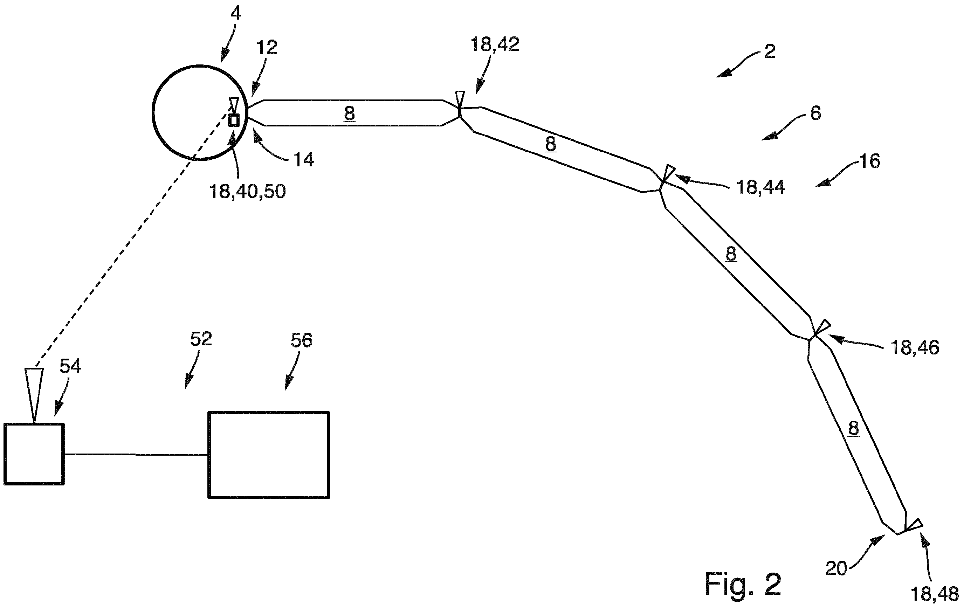

Die erste Funkverbindung 22 zwischen der Haupteinheit 40 und der ersten Knoteneinheit 42 kann beispielsweise dazu verwendet werden, um die erste Relativdistanz zwischen der Haupteinheit 40 und der ersten Knoteneinheit 42 zu ermitteln. Entsprechendes kann für die zweite Funkverbindung 24, die dritte Funkverbindung 26 und die vierte Funkverbindung 28 vorgesehen sein, sodass daraus jeweils die entsprechende Relativdistanz, nämlich die zweite Relativdistanz 34, die dritte Relativdistanz 36 bzw. die vierte Relativdistanz 38 ermittelt werden kann. Da jede der Knoteneinheiten 18 über die zugehörigen Funkeinheiten entsprechende Funkverbindungen aufbauen kann, entstehen dadurch eine Vielzahl von Funkverbindungen die es erlauben, die entsprechenden Abstände zu ermitteln, die sodann als Relativdistanzen bezeichnet sind. Diese Relativdistanzen eignen sich dazu, die geometrische Anordnung 16 des Schwimmschlauchs 6 relativ zu der Boje 4 zu bestimmen. Es ist deshalb vorgesehen, dass mindestens eine der Knoteneinheiten 18 als die Haupteinheit 40 ausgebildet ist. Diese ist in der Figur 1 beispielhaft durch die Knoteneinheit 18 gebildet, die an der Boje 4 befestigt ist. Diese Haupteinheit 40 ist außerdem zum Sammeln der von den weiteren Knoteneinheiten 42, 44, 46, 48 ermittelten Relativdistanzen über die Funkverbindungen 22, 24, 26, 28 und/oder das Funknetzwerk 30 ausgebildet. Außerdem ist die Haupteinheit 40 basierend auf den gesammelten Relativdistanzen 32, 34, 36, 38 zur Ermittlung von Standortdaten ausgebildet, die die geometrische Anordnung 16 des Schwimmschlauchs 6 relativ zu der Boje 4 repräsentieren. Mit diesen Standortdaten ist es deshalb möglich, eine Aussage darüber zu treffen, ob der Schwimmschlauch 6 beispielsweise eine Schlaufe oder eine andere Form hat, die es verhindert, dass ein Schwimmtanker einfach und verlässlich an das zweite Ende 20 des Schwimmschlauchs 6 ankoppeln kann, oder ob es die Anordnung 16 des Schwimmschlauchs 6 erlaubt, dass der Schwimmtanker einfach und verlässlich an das zweite Ende 20 gekoppelt werden kann. Es ist deshalb vorgesehen, dass die Haupteinheit 40 eine Funktransmittereinheit 50 aufweist, die zum drahtlosen Aussenden eines Standortsignals ausgebildet ist, dass die Standortdaten repräsentiert. In diesem Zusammenhang wird auf die Figur 2 verwiesen, in der das System 2 erneut schematisch dargestellt ist, wobei hier jedoch auf die Kennzeichnung der beispielhaften Funkverbindungen und der Relativdistanzen verzichtet wurde.

In der Figur 2 wird eine an Land befestigte Basisstation 52 dargestellt, die einen Funkempfänger 54 aufweist, der zum Empfang des von der Funktransmittereinheit 50 ausgesendeten Standortsignals ausgebildet ist. Die Empfängereinheit 54 kann mit einer Recheneinheit 56 der Basisstation 52 gekoppelt sein, sodass die von dem empfangenen Standortsignal repräsentierten Standortdaten an die Recheneinheit 56 von dem Funkempfänger 54 übertragen werden können. Die Recheneinheit 56 kann zur Auswertung der Standortdaten ausgebildet sein. Insbesondere kann die Recheneinheit 56 derart konfiguriert sein, um die Anordnung des Schwimmschlauchs 6 relativ zu der Boje 4 basierend auf den Standortdaten zu ermitteln. Zwar wurde zuvor erläutert, dass die Basisstation 52 an Land angeordnet ist. Dies ist jedoch nicht zwingend notwendig. So kann das Standortsignal mittels der Funktransmittereinheit 50 an einen Satelliten ausgesendet werden, der wiederum das Standortsignal oder ein davon abhängiges Signal über weitere Signalübertragungsstationen an den Funkempfänger 54 sendet. Der Funkempfänger 54 kann auch als kabelgebundener Empfänger ausgebildet (und auch als solches bezeichnet) sein, wenn dieser direkt an ein Netzwerk gekoppelt ist, das eine Signalverbindung zu einem Satelliten herstellen kann. Alternativ oder Ergänzend kann die Basisstation 52 auch auf einem Schiff, insbesondere auf einem Schwimmtanker, installiert sein. Sodann liegen die Informationen über die Anordnung des Schwimmschlauchs 6 bereits auf dem Schwimmtanker vor, bevor es an dem System 2 ankommt.

Die Funkeinheiten der Knoteneinheiten 18 können dazu ausgebildet sein, um Funkverbindungen 22, 24, 26, 28 über eine Reichweite zwischen 1 Meter und 1000 Metern herzustellen. Hingegen ist es für die Funktransmittereinheit 50 bevorzugt vorgesehen, dass die Funktransmittereinheit so das Standortsignal an einen Funkempfänger 54 senden kann, der über 3000 Meter entfernt angeordnet ist. So kann die Funktransmittereinheit 50 beispielsweise dazu ausgebildet sein, das Standortsignal mit einer Reichweite von mindestens 10 Kilometern auszusenden.

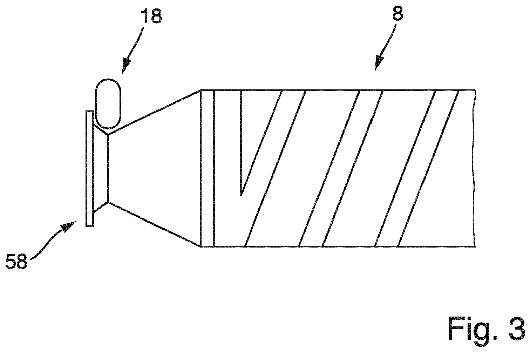

Wie aus der Zusammenschau der Figuren 1 und 2 schematisch zu entnehmen ist, sind die Schlauchsegmente 8 stirnseitig derart miteinander verbunden, dass sie den Schwimmschlauch 6 bilden. Jedes der Schlauchsegmente 8 kann dabei jeweils einen Anschlussflansch 58 an gegenüberliegenden Endabschnitten aufweisen. Jeder Anschlussflansch 58 ist zum lösbaren verbinden mit einem weiteren Anschlussflansch 58, insbesondere eines weiteren Schlauchsegments 8, ausgebildet. In der Figur 3 ist ein Endabschnitt eines Schlauchsegments 8 schematisch dargestellt. Hieraus ist auch der Anschlussflansch 58 schematisch zu erkennen. Die folgenden Erläuterungen können in analoger Weise für jedes Schlauchsegment 8 gelten.

Wie aus Figur 3 schematisch zu erkennen ist, ist es bevorzugt vorgesehen, dass eine dem Schlauchsegment 8 zugeordnete Knoteneinheit 18 an dem Anschlussflansch 58 angeordnet und/oder dort befestigt ist. So kann die entsprechende Knoteneinheit 18 an dem Anschlussflansch 58 mit einer Schraubenverbindung befestigt sein. Dazu können die Schrauben verwendet werden, die den Anschlussflansch 58 mit einem gegenüberliegend angeordneten Anschlussflansch 58 eines weiteren Schlauchsegments 8 verbinden. Dabei ist es bevorzugt vorgesehen, dass jede Knoteneinheit 18 wasserdicht ausgebildet ist. Dies ist insbesondere bei der Verwendung im Meer von besonderem Vorteil, da nicht nur die Schlauchsegmente 8 sondern auch die Knoteneinheiten 18 dem Meerwasser ausgesetzt sind. Außerdem ist es bevorzugt vorgesehen, dass jede der Knoteneinheiten 18 eine Energiequelle aufweist, wie beispielsweise eine Batterie, insbesondere eine Akkubatterie. Die Kapazität der Batterie ist vorzugsweise derart gewählt, dass die Knoteneinheit 18 mindestens 18 Monate ohne Austausch der Batterie betrieben werden kann.

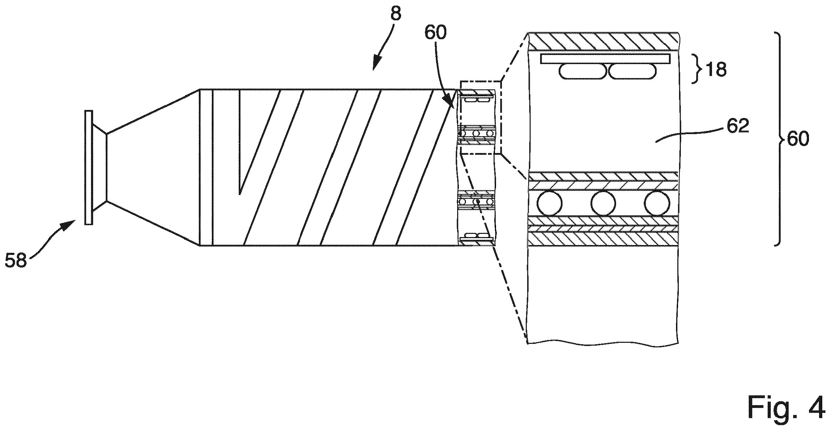

Um die Knoteneinheit 18 vor mechanischen Stößen und/oder vor dem Meerwasser besser zu schützen, kann es vorgesehen sein, dass die dem Schlauchsegment 8 zugeordnete Knoteneinheit 18 in die äußeren Mantelwandung 60 des jeweiligen Schlauchsegments 8 eingebettet ist. Dies ist beispielhaft in der Figur 4 schematisch dargestellt. In der Figur 4 ist auf der rechten Seite ein vergrößerter Teil der Mantelwandung 60 schematisch dargestellt. Der äußere Teil der Mantelwandung 60 weist oftmals Gummimaterial 62 auf, in das die jeweilige Knoteneinheit 18 eingebettet sein kann. Die Einbettung einer Knoteneinheit 18 in das Gummimaterial 62 eines Schlauchsegments 8 bietet den Vorteil, dass die jeweilige Knoteneinheit 18 besonders einfach und sicher gegen Meerwasser aber auch gegen mechanische Stöße geschützt ist. Dies erhöht die Lebensdauer der Knoteneinheit 18. Bei der Einbettung der Knoteneinheit 18 in das Gummimaterial 62 ist es jedoch bevorzugt vorgesehen, dass eine Kapazität der Batterie der Knoteneinheit 18 derart ausgestaltet ist, dass die Knoteneinheit 18 über mehrere Jahre, insbesondere zumindest über 5 Jahre, ohne Austausch der Batterie betrieben werden kann.

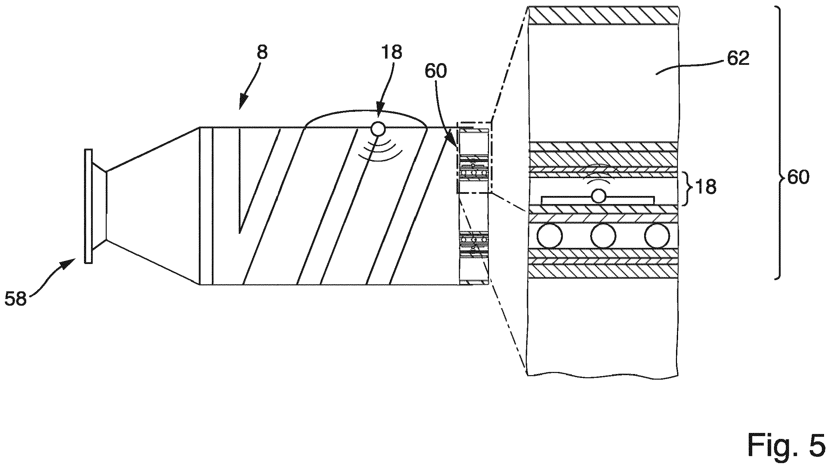

Wie aus der Figur 5 des Endabschnitts des Schlauchsegments 8 zu erkennen ist, kann die Mantelwandung 60 von mehreren in Radialrichtung aufeinander angeordneten Schichten gebildet sein. Die Knoteneinheit 18 eines Schlauchsegments 8 kann deshalb auch in einer weiter innen liegenden Schicht der Mantelwandung 6 angeordnet sein, sodass noch eine bessere Schutzwirkung vor Seewasser und/oder mechanischen Stößen gewährleistet sein kann.

Unter erneuter Bezugnahme auf die Figuren 1 und/oder 2 wird außerdem darauf hingewiesen, dass die Haupteinheit 40 eine Navigationseinheit aufweisen kann, die zum Empfang eines Navigationssignals gebildet ist. Außerdem kann die Navigationseinheit zur Ermittlung eines Standorts, in diesem Fall zur Ermittlung des Bojenstandorts der Boje 4, ausgebildet ist. Mittels der Navigationseinheit und dem empfangenen Navigationssignal können deshalb noch weitere Informationen zu den Standortdaten hinzugefügt werden, die über die Anordnung des Schwimmschlauchs 6 hinausgehen. Hierbei ist es bevorzugt vorgesehen, dass die Haupteinheit 40 dazu konfiguriert ist, die Standortdaten derart zu ergänzen, sodass die Standortdaten auch den geografischen Bojenstandort repräsentieren. Wenn diese Standortdaten nun mittels des Standortsignals von der Funktransmittereinheit 50 der Haupteinheit 40 versendet werden, können diese beispielsweise von dem Schwimmtanker empfangen werden, dass auf dem Weg zu dem System 2 ist. Basierend auf dem empfangenen Standortsignal kann deshalb ausgewertet werden, ob die Anordnung des Schwimmschlauchs 6 relativ zu der Boje 4 derart ausgestaltet ist, dass eine Ankopplung des Schwimmtankers an das zweite Ende 20 des Schwimmschlauchs 6 erfolgreich möglich ist. Darüber hinaus kann basierend auf dem geografischen Bojenstandort der Boje 4 und darüber hinaus der geometrischen Anordnung des Schwimmschlauchs 6 relativ zu der Boje 4 bestimmt werden, wie der Schwimmtanker an das System 2 heranfährt, um eine Kollision mit dem Schwimmschlauch 6 effektiv zu verhindern.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichenliste (Teil der Beschreibung)

- 2: System
- 4: Boje
- 6: Schwimmschlauch
- 8: Schlauchsegment
- 10: Flüssigkeitseingangsanschluss
- 11: Unterwasserschlauch
- 12: Flüssigkeitsausgangsanschluss
- 14: erstes Ende
- 16: Anordnung
- 18: Knoteneinheit
- 20: zweiten Ende
- 22: erste Funkverbindung
- 24: zweite Funkverbindung
- 26: dritte Funkverbindung
- 28: vierte Funkverbundung
- 30: Funknetzwerk
- 32: erste Relativdistanz
- 34: zweite Relativdistanz
- 36: dritte Relativdistanz
- 38: vierte Relativdistanz
- 40: Haupteinheit
- 42: erste Knoteneinheit
- 44: zweite Knoteneinheit
- 46: dritte Knoteneinheit
- 48: vierte Knoteneinheit
- 50: Funktransmittereinheit
- 52: Basisstation
- 54: Funkempfänger
- 56: Recheneinheit
- 58: Anschlussflansch
- 60: Mantelwandung
- 62: Gummimaterial

## Patentansprüche

1. System (2), aufweisend:
eine schwimmfähige Boje (4), und
ein Schwimmschlauch (6),
wobei der Schwimmschlauch (6) eine Mehrzahl von schwimmfähigen Schlauchsegmenten (8) aufweist, die in Reihe miteinander gekoppelt sind,
wobei die Boje (4) einen Flüssigkeitseingangsanschluss (10) aufweist, der zum Anschluss für einen Unterwasserschlauch (11) ausgebildet ist,
wobei die Boje (4) einen Flüssigkeitsausgangsanschluss (12) aufweist, der mit einem ersten Ende (14) des Schwimmschlauchs (6) verbunden ist, so dass der Schwimmschlauch (6) in einer geometrischen Anordnung zu der Boje (4) angeordnet ist,
wobei eine Mehrzahl von Knoteneinheiten (18) an dem Schwimmschlauch (6) und vorzugsweise der Boje (4) derart befestigt sind, so dass die Konteneinheiten (18) zwischen der Boje (4) und einem zweiten Ende (20) des Schwimmschlauchs (6) verteilt angeordnet sind,
wobei jede Konteneinheit (18) mittels einer zugehörigen Funkeinheit zum Aufbau jeweils einer Funkverbindung (22, 24, 26, 28) zu jeder von zumindest zwei der weiteren Funkeinheiten der jeweiligen Knoteneinheiten (18, 42, 44, 46, 48) ausgebildet ist, so dass ein Funknetzwerk (30), insbesondere ein Maschen-Funknetzwerk, entsteht,
wobei jede Knoteneinheit (18) zur Ermittlung einer Relativdistanz (32, 34, 36, 38) zu jeder über eine Funkverbindung (22, 24, 26, 28) verbunden, weiteren Knoteneinheit (18) basierend auf der jeweiligen Funkverbindung (22, 24, 26, 28) ausgebildet ist,
wobei mindestens eine der Knoteneinheiten (18) eine Haupteinheit (40) bildet, die zum Sammeln der von den weiteren Knoteneinheiten (42, 44, 46, 48) ermittelten Relativdistanzen (32, 34, 36, 38) über die Funkverbindungen (22, 24, 26, 28) und/oder das Funknetzwerk (30) ausgebildet ist,
wobei die Haupteinheit (40) basierend auf den gesammelten Relativdistanzen (32, 34, 36, 38) zur Ermittlung von Standortdaten ausgebildet ist, die die geometrische Anordnung des Schwimmschlauchs (6) relativ zu der Boje (4) repräsentieren, und
wobei die Haupteinheit (40) eine Funktransmittereinheit (50) aufweist, die zum drahtlosen Aussenden eines Standortsignals ausgebildet ist, das die Standortdaten repräsentiert.

2. System (2) nach dem vorstehenden Anspruch, **dadurch gekennzeichnet, dass** jedes Schlauchsegment (8) zumindest indirekt mit mindestens einer der Knoteneinheiten (18) verbunden ist.

3. System (2) nach Anspruch 1, **dadurch gekennzeichnet, dass** jedes Schlauchsegment (8) jeweils eine der Knoteneinheiten (18) umfasst.

4. System (2) nach dem vorstehenden Anspruch, **dadurch gekennzeichnet, dass** die Knoteneinheit (18) jedes Schlauchsegments (8) an der seitlichen Außenfläche des jeweiligen Schlauchsegments (8) befestigt ist.

5. System (2) nach Anspruch 3, **dadurch gekennzeichnet, dass** die Knoteneinheit (18) jedes Schlauchsegments (8) in eine Mantelwandung (60) des jeweiligen Schlauchsegments (8) eingebettet ist.

6. System (2) nach einem der vorhergehenden Ansprüche, **dadurch gekennzeichnet, dass** die Boje (4) die Haupteinheit (40) umfasst, so dass die Haupteinheit (40) mit der Boje (4) verbunden ist.

7. System (2) nach einem der vorhergehenden Ansprüche, **dadurch gekennzeichnet, dass** die Haupteinheit (40) eine Navigationseinheit umfasst, die zum Empfang eines satellitengestützten, drahtlosen Navigationssignals ausgebildet ist, wobei die Navigationseinheit konfiguriert ist, einen geographischen Bojenstandort der Boje (4) basierend auf dem Navigationssignal zu ermitteln, und wobei die Haupteinheit (40) konfiguriert ist, die Standortdaten derart zu ergänzen, so dass die Standortdaten auch den geographischen Bojenstandort repräsentieren.

8. System (2) nach einem der vorstehenden Ansprüche 1 bis 5, **dadurch gekennzeichnet, dass** einer der Schlauchsegmente (8) die Haupteinheit (40) umfasst, so dass die Haupteinheit (40) mit diesem Schlauchsegment (8) verbunden ist, das als Hauptschlauchsegment bezeichnet ist.

9. System (2) nach einem der vorstehenden Ansprüche, **dadurch gekennzeichnet, dass** eine der Knoteneinheiten (18), die zumindest indirekt mit einem der Schlauchsegmente (8), insbesondere dem Hauptschlauchsegment, verbunden ist, eine weitere Navigationseinheit umfasst, die zum Empfang eines weiteren satellitengestützten, drahtlosen Navigationssignals ausgebildet ist, wobei die weitere Navigationseinheit zur Ermittlung eines geografischen Schlauchstandorts des jeweiligen Schlauchsegments (8) basierend auf dem weiteren Navigationssignals konfiguriert ist, wobei die Funkeinheiten mittels der Funkverbindungen und/oder des Funknetzwerks (30) zum Austausch des geografischen Schlauchstandorts konfiguriert sind, und wobei die Haupteinheit (40) zum Erweitern der Standortdaten konfiguriert ist, so dass die Standortdaten auch den geografische Schlauchstandort repräsentieren.

10. System (2) nach einem der vorstehenden Ansprüche, **dadurch gekennzeichnet, dass** die Funktransmittereinheit (50) zum drahtlosen Aussenden des Standortsignals an einen Satellitenempfänger oder einen an Land stationär installierten Empfänger ausgebildet ist.

11. System (2) nach einem der vorstehenden Ansprüche, **dadurch gekennzeichnet, dass** jedes Schlauchsegment (8) eine Länge von mindestens 7,5 Metern aufweist.

12. System (2) nach dem vorstehenden Anspruch, **dadurch gekennzeichnet, dass** jede Knoteneinheit (18) zum Senden und Empfangen von Referenzsignalen über die Funkverbindungen (22, 24, 26, 28) ausgebildet ist, und wobei jede Knoteneinheit (18) zur Ermittlung der Relativabstände mit einer Genauigkeit von mindestens 85 %, vorzugsweise mindestens 95 %, basierend auf den Referenzsignalen ausgebildet ist.

13. System (2) nach einem der vorhergehenden Ansprüche, **dadurch gekennzeichnet, dass** die Knoteneinheiten (8) zum Aktualisieren der ermittelten Relativdistanzen (32, 34, 36, 38) in vorbestimmten Zeitintervallen ausgebildet sind, wobei die Haupteinheit (40) konfiguriert ist, die Standortdaten basierend auf den aktualisierten Relativdistanzen (32, 34, 36, 38) zu aktualisieren, und wobei die Funktransmittereinheit (50) konfiguriert ist, das Standortsignal mit aktualisierten Standortdaten nach jeder Aktualisierung der Standortdaten zu senden.

## Claims

1. System (2) having:
a floatable buoy (4), and
a floating hose (6),
the floating hose (6) having a plurality of floatable hose segments (8), which are coupled to one another in series,
the buoy (4) having a liquid inlet connection (10), which is designed for an underwater hose (11) to be connected,
wherein the buoy (4) has a liquid outlet connection (12), which is connected to a first end (14) of the floating hose (6), with the result that the floating hose (6) is arranged in a geometrical arrangement with respect to the buoy (4),
wherein a plurality of node units (18) are fastened to the floating hose (6) and preferably to the buoy (4) in such a way that the node units (18) are arranged distributed between the buoy (4) and a second end (20) of the floating hose (6),
wherein each node unit (18) is designed to use an associated radio unit to set up in each case a radio connection (22, 24, 26, 28) to each of at least two of the further radio units of the respective node units (18, 42, 44, 46, 48), thus resulting in a radio network (30), in particular a mesh radio network,
wherein each node unit (18) is designed to determine a relative distance (32, 34, 36, 38) from each further node unit (18) connected by way of a radio connection (22, 24, 26, 28) on the basis of the respective radio connection (22, 24, 26, 28),
wherein at least one of the node units (18) forms a main unit (40), which is designed to collect the determined relative distances (32, 34, 36, 38) from the further node units (42, 44, 46, 48) by way of the radio connections (22, 24, 26, 28) and/or the radio network (30),
wherein the main unit (40) is designed to determine on the basis of the collected relative distances (32, 34, 36, 38) location data which represent the geometrical arrangement of the floating hose (6) relative to the buoy (4), and
wherein the main unit (40) has a radio transmitter unit (50), which is designed to wirelessly emit a location signal representing the location data.

2. System (2) according to the preceding claim, **characterized in that** each hose segment (8) is connected at least indirectly to at least one of the node units (18).

3. System (2) according to Claim 1, **characterized in that** each hose segment (8) respectively comprises one of the node units (18).

4. System (2) according to the preceding claim, **characterized in that** the node unit (18) of each hose segment (8) is fastened on the lateral outer surface of the respective hose segment (8).

5. System (2) according to Claim 3, **characterized in that** the node unit (18) of each hose segment (8) is embedded in a peripheral wall (60) of the respective hose segment (8).

6. System (2) according to one of the preceding claims, **characterized in that** the buoy (4) comprises the main unit (40), with the result that the main unit (40) is connected to the buoy (4).

7. System (2) according to one of the preceding claims, **characterized in that** the main unit (40) comprises a navigation unit, which is designed to receive a satellite-based, wireless navigation signal, wherein the navigation unit is configured to determine a geographical buoy location of the buoy (4) on the basis of the navigation signal, and wherein the main unit (40) is configured to supplement the location data, with the result that the location data also represent the geographical buoy location.

8. System (2) according to one of the preceding Claims 1 to 5, **characterized in that** one of the hose segments (8) comprises the main unit (40), with the result that the main unit (40) is connected to this hose segment (8), which is referred to as the main hose segment.

9. System (2) according to one of the preceding claims, **characterized in that** one of the node units (18) is connected at least indirectly to one of the hose segments (8), in particular the main hose segment, comprises a further navigation unit, which is designed to receive a further satellite-based, wireless navigation signal, wherein the further navigation unit is configured to determine a geographical hose location of the respective hose segment (8) on the basis of the further navigation signal, wherein the radio units are configured to exchange the geographical hose location by means of the radio connections and/or the radio network (30), and wherein the main unit (40) is configured to add to the location data, with the result that the location data also represent the geographical hose location.

10. System (2) according to one of the preceding claims, **characterized in that** the radio transmitter unit (50) is designed to wirelessly emit the location signal to a satellite receiver or a receiver installed at a fixed location on land.

11. System (2) according to one of the preceding claims, **characterized in that** each hose segment (8) has a length of at least 7.5 metres.

12. System (2) according to the preceding claim, **characterized in that** each node unit (18) is designed to transmit and receive reference signals by way of the radio connections (22, 24, 26, 28), and wherein each node unit (18) is designed to determine the relative distances with an accuracy of at least 85%, preferably at least 95%, on the basis of the reference signals.

13. System (2) according to one of the preceding claims, **characterized in that** the node units (8) are designed to update the determined relative distances (32, 34, 36, 38) at predetermined time intervals, wherein the main unit (40) is configured to update the location data on the basis of the updated relative distances (32, 34, 36, 38), and wherein the radio transmitter unit (50) is configured to transmit the location signal with updated location data after each updating of the location data.

## Revendications

1. Système (2), comprenant :
une bouée flottante (4), et
un tuyau flottant (6),
le tuyau flottant (6) possédant une pluralité de segments de tuyau (8) flottants qui sont accouplés entre eux en série,
la bouée (4) possédant un raccord d'entrée de liquide (10) qui est configuré pour le raccordement d'un tuyau sous-marin (11),
la bouée (4) possédant un raccord de sortie de liquide (12) qui est relié à une première extrémité (14) du tuyau flottant (6), de sorte que le tuyau flottant (6) est disposé dans un arrangement géométrique par rapport à la bouée (4),
une pluralité d'unités de nœud (18) étant fixées au tuyau flottant (6) et de préférence à la bouée (4) de telle sorte que les unités de nœud (18) sont disposées de manière répartie entre la bouée (4) et une deuxième extrémité (20) du tuyau flottant (6),
chaque unité de nœud (18) étant configurée, au moyen d'une unité radioélectrique associée, pour établir respectivement une liaison radioélectrique (22, 24, 26, 28) avec chacune d'au moins deux des unités radioélectriques supplémentaires des unités de nœud (18, 42, 44, 46, 48) respectives, de sorte qu'il se forme un réseau radioélectrique (30), notamment un réseau radioélectrique maillé,
chaque unité de nœud (18) étant configurée pour déterminer une distance relative (32, 34, 36, 38) par rapport à chaque unité de nœud (18) supplémentaire,
reliée par le biais d'une liaison radioélectrique (22, 24, 26, 28), en se basant sur la liaison radioélectrique (22, 24, 26, 28) respective,
au moins l'une des unités de nœud (18) formant une unité principale (40) qui est configurée pour collecter les distances relatives (32, 34, 36, 38) déterminées par les unités de nœud (42, 44, 46, 48) supplémentaires par le biais des liaisons radioélectriques (22, 24, 26, 28) et/ou du réseau radioélectrique (30),
l'unité principale (40) étant configurée pour, en se basant sur les distances relatives (32, 34, 36, 38) collectées, déterminer des données d'emplacement qui représentent l'arrangement géométrique du tuyau flottant (6) par rapport à la bouée (4), et
l'unité principale (40) possédant une unité d'émission radioélectrique (50), qui est configurée pour émettre sans fil un signal d'emplacement qui représente les données d'emplacement.

2. Système (2) selon la revendication précédente, **caractérisé en ce que** chaque segment de tuyau (8) est relié au moins indirectement avec au moins l'une des unités de nœud (18).

3. Système (2) selon la revendication 1, **caractérisé en ce que** chaque segment de tuyau (8) comporte respectivement l'une des unités de nœud (18).

4. Système (2) selon la revendication précédente, **caractérisé en ce que** l'unité de nœud (18) de chaque segment de tuyau (8) est fixée à la surface extérieure latérale du segment de tuyau (8) respectif.

5. Système (2) selon la revendication 3, **caractérisé en ce que** l'unité de nœud (18) de chaque segment de tuyau (8) est incorporée dans une paroi d'enveloppe (60) du segment de tuyau (8) respectif.

6. Système (2) selon l'une des revendications précédentes, **caractérisé en ce que** la bouée (4) comporte l'unité principale (40), de sorte que l'unité principale (40) est reliée à la bouée (4).

7. Système (2) selon l'une des revendications précédentes, **caractérisé en ce que** l'unité principale (40) comporte une unité de navigation qui est configurée pour recevoir un signal de navigation sans fil assisté par satellite, l'unité de navigation étant configurée pour déterminer un emplacement de bouée géographique de la bouée (4) en se basant sur le signal de navigation, et l'unité principale (40) étant configurée pour compléter les données d'emplacement de telle sorte que les données d'emplacement représentent également l'emplacement de bouée géographique.

8. Système (2) selon l'une des revendications précédentes 1 à 5, **caractérisé en ce que** l'un des segments de tuyau (8) comporte l'unité principale (40), de sorte que l'unité principale (40) est reliée à ce segment de tuyau (8), qui est désigné comme segment de tuyau principal.

9. Système (2) selon l'une des revendications précédentes, **caractérisé en ce que** l'une des unités de nœud (18), qui est reliée au moins indirectement à l'un des segments de tuyau (8), notamment au segment de tuyau principal, comporte une unité de navigation supplémentaire qui est configurée pour recevoir un signal de navigation sans fil assisté par satellite supplémentaire, l'unité de navigation supplémentaire étant configurée pour déterminer un emplacement de tuyau géographique du segment de tuyau (8) respectif en se basant sur le signal de navigation supplémentaire, les unités radioélectriques étant configurées pour échanger l'emplacement de tuyau géographique au moyen des liaisons radioélectriques et/ou du réseau radioélectrique (30), et l'unité principale (40) étant configurée pour étendre les données d'emplacement de sorte que les données d'emplacement représentent également l'emplacement de tuyau géographique

10. Système (2) selon l'une des revendications précédentes, **caractérisé en ce que** l'unité d'émission radioélectrique (50) est configurée pour émettre sans fil le signal d'emplacement à un récepteur satellitaire ou à un récepteur installé en position fixe à terre.

11. Système (2) selon l'une des revendications précédentes, **caractérisé en ce que** chaque segment de tuyau (8) présente une longueur d'au moins 7,5 mètres.

12. Système (2) selon la revendication précédente, **caractérisé en ce que** chaque unité de nœud (18) est configurée pour émettre et recevoir des signaux de référence par le biais des liaisons radioélectriques (22, 24, 26, 28), et chaque unité de nœud (18) étant configurée pour déterminer les écarts relatifs avec une précision d'au moins 85 %, de préférence d'au moins 95 %, en se basant sur les signaux de référence.

13. Système (2) selon l'une des revendications précédentes, **caractérisé en ce que** les unités de nœud (8) sont configurées pour actualiser les distances relatives (32, 34, 36, 38) déterminées à des intervalles de temps prédéterminés, l'unité principale (40) étant configurée pour actualiser les données d'emplacement en se basant sur les distances relatives (32, 34, 36, 38) actualisées, et l'unité d'émission radioélectrique (50) étant configurée pour émettre le signal d'emplacement avec les données d'emplacement actualisées après chaque actualisation des données d'emplacement.
